(19) Europäisches Patentamt
European Patent Office
Office européen des brevets

(11) Numéro de publication: **0 063 067**
**B1**

# (12) FASCICULE DE BREVET EUROPEEN

(45) Date de publication du fascicule du brevet: **23.11.83**

(51) Int. Cl.³: **C 01 B 33/04**

(21) Numéro de dépôt: **82400550.8**

(22) Date de dépôt: **26.03.82**

(54) **Procédé de fabrication de silane.**

(30) Priorité: **03.04.81 FR 8106710**

(43) Date de publication de la demande: **20.10.82 Bulletin 82/42**

(45) Mention de la délivrance du brevet: **23.11.83 Bulletin 83/47**

(84) Etats contractants désignés: **AT BE DE FR GB IT NL**

(56) Documents cités:
**FR - A - 2 118 725**
**FR - A - 2 261 977**
**FR - A - 2 290 447**
**FR - A - 2 290 448**

(73) Titulaire: **RHONE-POULENC SPECIALITES CHIMIQUES, "Les Miroirs" 18, Avenue d'Alsace, F-92400 Courbevoie (FR)**

(72) Inventeur: **Simon, Gérard, 106, boulevard du 11 Novembre, F-69100 - Villeurbanne (FR)**
Inventeur: **Soldat, André, 90, rue Racine, F-69100 - Villeurbanne (FR)**

(74) Mandataire: **Savina, Jacques et al, RHONE-POULENC RECHERCHES Service Brevets Chimie et Polymères 25, Quai Paul Doumer, F-92408 Courbevoie Cedex (FR)**

**EP 0 063 067 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Procédé de fabrication de silane

La présente invention concerne un procédé de fabrication de silane.

Elle a trait plus particulièrement à un procédé de fabrication de silane à partir d'halogénosilanes.

Le silane constitue une matière première de choix pour obtenir, par décomposition, du silicium utilisable notamment dans les dispositifs à semi-conducteurs ou photovoltaïques (cellules solaires).

On sait qu'il est possible d'obtenir du silane par dismutation de trichlorosilane en présence de divers catalyseurs selon les réactions équilibrées suivantes:

(1) $2HSiCl_3 \rightleftharpoons H_2SiCl_2 + SiCl_4$

(2) $2H_2SiCl_2 \rightleftharpoons HSiCl_3 + H_3SiCl$

(3) $2H_3SiCl \rightleftharpoons SiH_4 + H_2SiCl_2$

soit globalement

(4) $4HSiCl_3 \rightleftharpoons SiH_4 + 3SiCl_4$

Ainsi selon le brevet français n° 2 261 977 il a été proposé de produire du silane par réaction de dismutation ou de redistribution de $HSiCl_3$ dans un lit de résine solide d'échange d'anions à une température suffisante pour provoquer la vaporisation, hors de la zone de réaction, des produits à plus faible point d'ébullition de la réaction et pour provoquer la condensation du produit liquide à point supérieur d'ébulliton résultant de la réaction, $SiCl_4$, et son écoulement loin de la zone de réaction. On maintient la température au sommet du lit à une valeur supérieure au point d'ébullition de $SiH_4$ et inférieure au point d'ébullition de $H_3SiCl$; et l'on récupère du lit $SiH_4$ comportant de petites quantités d'hydrogénochlorosilanes qui nécessitent une séparation ultérieure.

Ce procédé extrêmement complexe et délicat à mettre en œuvre opère soit une distillation continue des produits des différentes réactions équilibrées (1) (2) et (3) et permet une certaine séparation des divers produits en présence, soit une purification de $SiH_4$ sur piège à carbon.

Par ailleurs, on connaît différents procédés de fabrication de dichlorosilane par dismutation du trichlorosilane en présence de catalyseurs divers. Lors de cette dismutation selon la réaction (1) on obtient également dans certains cas les autres silanes chlorés en proportions très faibles; les rendements en dichlorosilane obtenus étant toujours bien supérieurs aux rendements dans les autres chlorosilanes. Parmi les catalyseurs connus dans ce but, on a proposé notamment: les amines tertiaires de formule générale NR'R"R''' dans laquelle R',R",R''' sont des radicaux alcoyles identiques ou différents (Brevet français n° 1 111 925), les chlorhydrates d'amines (Brevet français n° 2 096 605), les pyrrolidones N-substituées (Brevet français n° 2 290 447) et les tétraalcoylurées (Brevet français n° 2 290 448).

La demanderesse a mis au point un procédé de fabrication de silane qui permet notamment d'obtenir celui-ci très aisément et avec une excellente sélectivité sans avoir recours à une série de distillations successives comme dans le procédé selon le FR-A-2 261 977. Ce procédé comporte la mise en contact d'au moins un halogèno-silane avec un composé (catalyseur) comportant au moins un groupement oxo-amine:

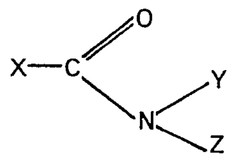

pour réaliser la dismutation et/ou la redistribution de l'halogénosilane en silane, tétrahalogénure de silicium et halogénosilanes résiduels et à mettre en contact ces produits avec ledit composé pour opérer la séparation du silane des autres produits de réaction.

La demanderesse a découvert en effet de façon totalement inattendue que, d'une part, les composés ci-dessus permettaient d'obtenir du silane à partir d'un halogéno-silane par dismutation et/ou redistribution avec une bonne sélectivité et que, d'autre part, ces composés réalisaient la séparation du silane des autres produits de réactions par solvatation sélective de ceux-ci.

Autrement dit, et sans limiter la présente invention à la théorie, il semble que les composés décrits ci-dessus jouent à la fois le rôle de catalyseur permettant d'obtenir le silane et de solvant des autres composés siliciés permettant ainsi une séparation très aisée entre le silane et ces composés.

Ainsi, la présente invention concerne un procédé de fabrication de silane par la dismutation et/ou la redistribution d'un halogéno-silane par mise en contact d'au moins un halogèno-silane comportant au moins une liaison Si-H avec un catalyseur caractérisé en ce que le catalyseur comporte au moins un groupement oxo-amine et en ce que l'on sépare le silane formé en mettant en contact les produits de réaction avec ledit catalyseur comportant au moins un groupement oxo-amine.

Les halogèno-silane comportant au moins une liaison Si-H que l'on peut mettre en œuvre selon le procédé de l'invention sont notamment ceux qui ont pour formule $R_nH_m Si Cl_{4-(n+m)}$ dans laquelle n peut avoir les valeurs 0, 1, 2 ou 3 et m les valeurs 1, 2 ou 3 et R, quand il existe, est choisi parmi les radicaux alcoyle ou aryle et de préférence les radicaux: méthyle, éthyle, propyle, isopropyle et phényle. Selon un mode de mise en œuvre pré-

féré de l'invention, on utilise le trichlorosilane, le dichlorosilane, le méthyldichlorosilane, le diméthylchlorosilane, le phényldichlorosilane ou l'éthyldichlorosilane.

Les composés comportant au moins un groupement oxo-amine que l'on peut mettre en œuvre selon le procédé de l'invention répondent à la formule générale

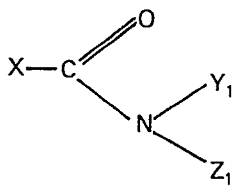

dans laquelle X est choisi parmi les radicaux hydrocarbonés ayant de 1 à 10 atomes de carbone et les radicaux:

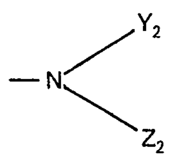 ; — OR ; 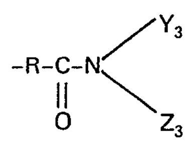

avec $Y_2$, $Z_2$, R, $Y_3$, $Z_3$ représentant des radicaux hydrocarbonés ayant de 1 à 10 atomes de carbone.

$Y_1$ et $Z_1$ sont choisis parmi les radicaux hydrocarbonés ayant de 1 à 10 atomes de carbone et les radicaux alkoxy ayant de 1 à 10 atomes de carbone.

$Y_1$, $Z_1$, $Y_2$ et $Z_2$ pouvant être liés,

X et $Y_1$ ou $Z_1$ pouvant être liés quand X est un radical hydrocarboné,

$X_3$ et $Z_3$ pouvant être liés.

Parmi ces composés on pourra utiliser notamment les urées, les diurées, les carbamates, les N-alkoxyamides, les tétraalcoylurées et les pyrrolidones N-substituées.

Selon le procédé de l'invention on préfère mettre en œuvre les tétraalcoylurées et les pyrrolidones N-substituées.

Les tétraalcoylurées qui conviennent plus particulièrement aux fins de l'invention répondent à la formule générale

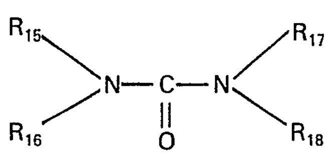

dans laquelle les radicaux $R_{15}$, $R_{16}$, $R_{17}$, $R_{18}$ identiques ou différents représentent des groupements alcoyle à chaîne droite ou ramifiée comportant de 1 à 6 atomes de carbone. Parmi celles-ci on peut citer la tétraméthylurée, la tétraéthylurée et la tétrabutylurée

Les pyrrolidones N-substituées qui conviennent plus particulièrement aux fins de l'invention répondent à la formule générale:

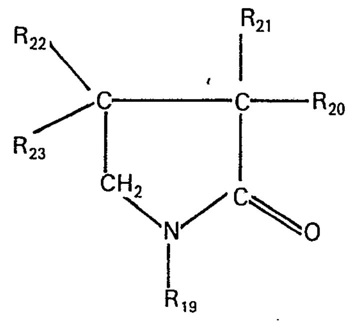

dans laquelle les radicaux $R_{20}$, $R_{21}$, $R_{22}$, $R_{23}$ identiques ou différents représentent l'hydrogène ou un radical méthyle, le radical $R_{19}$ répresente un radical alcoyle ou alcenyle à chaîne droite ou ramifiée comportant de 1 à 6 atomes de carbone, ou un radical cyclohexyle ou phényle. Parmi celles-ci on peut citer la N-méthylpyrrolidone et la N-éthylpyrrolidone.

La dismutation et/ou la redistribution de l'halogéno-silane est opérée par la mise en contact entre l'halogèno-silane et le catalyseur (composé) comportant au moins un groupement oxo-amine. Cette dismutation et/ou redistribution conduit à la formation du silane, du tétrahalogénure de silicium ou un alcoyle ou aryle halogéno-silanes ainsi que des halogéno-silanes résiduels.

De préférence, le rapport molaire entre le composé comportant au moins un groupement oxo-amine et l'halogéno-silane est compris entre 2 et 1/50 et de préférence entre 1/2 et 1/20.

Selon l'invention, on peut opérer la dismutation et/ou la redistribution d'halogéno-silanes purs ou en mélange en présence éventuellement de tétrachlorure de silicium.

La dismutation et/ou redistribution de l'halogéno-silane est opérée à une température comprise entre –30°C et 300°C selon le chlorosilane et le catalyseur utilisés et de préference entre 0°C et 100°C et sous une pression inférieure, égale ou supérieure à la pression atmosphérique.

Selon l'invention, au fur et à mesure de la formation du silane par dismutation et/ou redistribution, on opère la séparation du silane des autres produits par mise en contact des produits réactionnels avec le composé comportant au moins un groupe oxo-amine; ledit composé assure alors la solvatation sélective des divers produits, à l'exclusion du silane et permet ainsi sa séparation de celui-ci d'une manière extrêmement simple et très efficace.

La température à laquelle est effectuée cette séparation doit être telle que les produits autres que le silane restent dissouts dans la phase liquide. Cette température est de préférence comprise entre -30°C et 50°C.

Selon l'invention, il est possible d'ajouter un diluant au composé comportant au moins un groupement oxo-amine tel qu'un hydrocarbure aliphatique ou aromatique (cyclohexane, benzène, orthodichlorobenzène, toluène...).

Les températures et les débits des divers produits sont ajustés de façon à permettre, d'une part, les réactions de dismutation et/ou de redistribution désirées et, d'autre part, la récupération du silane.

Le procédé selon l'invention peut être réalisé en continu ou en discontinu.

Dans une forme de réalisation préférée, le procédé de l'invention est mis en œuvre dans une colonne dans laquelle l'halogéno-silane est introduit en pied de la colonne sous forme liquide ou gazeuse dans une zône présentant une température comprise entre -30°C et 200°C, et de préférence entre 0°C et 10°C, le composé comportant au moins un groupement oxo-amine circule à contre-courant dans la colonne et est alimenté en tête de celle-ci. On maintient dans la colonne un gradient de température compris entre -50° et 200°C, et de préférence entre -30°C et 100°C. La température en tête de la colonne est telle que les produits autres que $SiH_4$ restent dissouts dans la phase liquide. Cette température est de préférence comprise entre -30°C et 50°C. On recueille en pied de colonne du tétrahalogénosilane, des halogéno-silanes résiduels le composé comportant au moins un groupement oxo-amine et le diluant éventuel.

Si on le désire, on peut facilement séparer le composé comportant au moins un groupement oxo-amine et le solvant éventuel du tétrahalogénosilane et des halogéno-silanes résiduels par distillation afin de les recycler en tête de la colonne. Par ailleurs, le tétrahalogénosilane peut également, après séparation, être transformé en halogéno-silane ce dernier étant recyclé également dans le procédé avec les halogéno-silanes résiduels.

La présente invention constitue ainsi un procédé parfaitement intégré d'une mise en œuvre aisée pour la fabrication de silane à partir d'halogéno-silane.

L'exemple ci-après illustre l'invention sans en limiter la portée.

Exemple 1

Le réacteur utilisé est constitué d'un ballon de 1 litre surmonté d'une colonne à plateaux de 800 mm de long et de 30 mm de diamètre.

Du dichlorosilane est introduit par barbottage dans le ballon préalablement rempli de 500 ml de mélange tétraméthylurée/orthodichlorobenzène (rapport 50/50 volumique). Son débit est de 74 g/h. Le mélange tétraméthylurée/orthodichlorobenzène est introduit en tête de colonne, à un débit de 58,7 ml/h. Ce mélange circule à contre courant avec les vapeurs montantes dans la colonne.

La température du ballon est maintenue à 26°C. La température de la colonne est de 26°C en pied et de -12°C en tête.

Le volume de la masse réactionnelle dans le ballon est maintenu à 500 ml par prélèvement continu, à niveau constant. Cette phase liquide est périodiquement analysée par chromatographie en phase gazeuse.

La phase gazeuse sortant en tête de colonne est aussi analysée par chromatographie en phase gazeuse et son débit est mesuré.

A l'équilibre, la composition de la phase liquide prélevée est la suivante (pourcentages massiques).

| | |
|---|---|
| $H_2SiCl_2$ | 23 % |
| $HSiCl_3$ | 35 % |
| $SiCl_4$ | 1 % |
| Tétraméthylurée | 17 % |
| $C_6H_4Cl_2$ | 24 % |

La composition de la phase gazeuse sortant du réacteur est la suivante (pourcentages volumiques):

| | |
|---|---|
| $H_2$ | 2 % |
| $SiH_4$ | 98 % |

Cette phase gazeuse ne contient pas de chlorosilanes. Son débit est de 2,40 l/h.

Ces compositions correspondent à un taux de transformation de $H_2SiCl_2$ de 51,6 % et le rendement en silane par rapport à $H_2SiCl_2$ transformé est de 75,4 %.

Exemple 2

Dans le même réacteur que celui décrit dans l'exemple 1, sont introduits $H_2SiCl_2$ et le mélange tétraméthylurée/orthodichlorobenzène (50/50 volumique) à des débits identiques, dans des conditions analogues.

La température du ballon est fixée à 36,5°C. La température de la colonne est de 29°C en pied et de -11°C en tête.

A l'équilibre, la composition de la phase liquide prélevée est la suivante:

| | |
|---|---|
| $H_2SiCl_2$ | 16 % |
| $HSiCl_3$ | 33 % |
| $SiCl_4$ | 1 % |
| Tétraméthylurée | 21 % |
| $C_6H_4Cl_2$ | 29 % |

La composition de la phase gazeuse sortant du réacteur est la suivante:

| | |
|---|---|
| $H_2$ | 4 % |
| $SiH_4$ | 96 % |

Son débit est de 3,16 l/h.

Ces compositions correspondent à un taux de transformation de $H_2SiCl_2$ de 71,3 % et le rendement en silane par rapport à $H_2SiCl_2$ transformé est de 70,2 %.

**Revendications**

1. Procédé de fabrication de silane par la dismutation et/ou la redistribution d'un halogéno-silane par mise en contact d'au moins un halogéno-silane comportant au moins une liaison Si-H avec un catalyseur caractérisé en ce que le catalyseur comporte au moins un groupement oxo-amine et en ce que l'on sépare le silane formé en mettant en contact les produits de réaction avec

ledit catalyseur comportant au moins un groupement oxo-amine.

2. Procédé selon la revendication 1, caractérisé en ce que le catalyseur comportant au moins un groupement oxo-amine a pour formule générale:

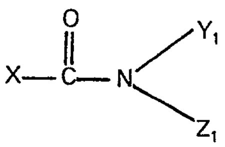

dans laquelle X est choisi parmi les radicaux hydrocarbonés ayant de 1 à 10 atomes de carbone et les radicaux:

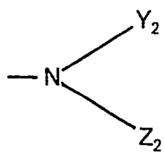 ; — OR ; 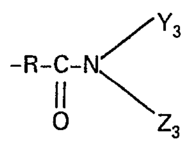

avec $Y_2$, $Z_2$, R, $Y_3$, $Z_3$ représentant des radicaux hydrocarbonés ayant de 1 à 10 atomes de carbone. $Y_1$ et $Z_1$ sont choisis parmi les radicaux hydrocarbonés ayant de 1 à 10 atomes de carbone et les radicaux alkoxy ayant de 1 à 10 atomes de carbone.

$Y_1$, $Z_1$, $Y_2$ et $Z_2$ pouvant être liés,
X et $Y_1$ ou $Z_1$ pouvant être liés quand X est un radical hydrocarboné,
$X_3$ et $Z_3$ pouvant être liés.

3. Procédé selon la revendication 2, caractérisé en ce que le catalyseur est choisi parmi le groupe comportant: les urées, les diurées, les carbamates, les N-alkoxyamides, les tétraalcourées et les pyrrolidones N-substituées.

4. Procédé selon la revendication 3, caractérisé en ce que le catalyseur est choisi parmi le groupe comportant les tétraalcoylurées et les pyrrolidones N-substituées et de préférence la tétraméthylurée, la tétraéthylurée, la tétrabutylurée, la N-méthylpyrrolidone et la N-éthylpyrrolidone.

5. Procédé selon l'une quelconque des revendications précédentes, caractérisé en ce qu'il est mis en œuvre dans une colonne dans laquelle l'halogéno-silane est introduit en bas de la colonne sous forme liquide ou gazeuse dans une zône présentant une température comprise entre -30°C et 200°C et préférence entre 0°C et 100°C, le catalyseur comportant au moins un groupement oxo-amine éventuellement en solution dans un diluant circule à contre-courant dans la colonne et est alimenté en tête de celle-ci; on maintient dans la colonne un gradient de température compris entre - 50°C et 200°C, et de préférence entre - 30°C et 100°C,; la température en tête de la colonne est telle que les produits autres que $SiH_4$ restent dissouts dans la phase liquide; cette température est de préférence comprise entre - 30°C et 50°C; on recueille en pied de colonne du tétrahalogénosilane, ou un alcoyle ou aryle halogéno-silane des halogéno-silanes résiduels, le catalyseur comportant au moins un groupement oxo-amine et le diluant éventuel.

**Patentansprüche:**

1. Verfahren zur Herstellung von Silan durch Disproportionierung und/oder Umlagerung eines Halogensilans, wobei wenigstens ein Halogensilan mit wenigstens einer Si-H-Bindung mit einem Katalysator in Berührung gebracht wird, dadurch gekennzeichnet, dass der Katalysator wenigstens eine Oxo-Amin-Gruppierung enthält und dass man das gebildete Silan abtrennt, während man die Reaktionsprodukte mit den genannten wenigstens eine Oxo-Amin-Gruppierung enthaltenden Katalysator in Berührung bringt.

2. Verfahren nach Anspruch 1, dadurch gekennzeichnet, dass der wenigstens eine Oxo-Amin-Gruppierung enthaltene Katalysator die allgemeine Formel

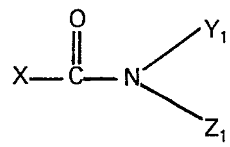

hat, in der X unter den Kohlenwasserstoffresten mit 1 bis 10 Kohlenstoffatomen und den Resten

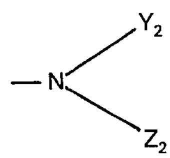 ; —OR ; 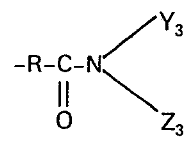

wobei $Y_2$, $Z_2$, R, $Y_3$ und $Z_3$ Kohlenwasserstoffreste mit 1 bis 10 Kohlenstoffatomen bedeuten,

$Y_1$ und $Z_1$ unter den Kohlenwasserstoffresten mit 1 bis 10 Kohlenstoffatomen und den Alkoxyresten mit 1 bis 10 Kohlenstoffatomen gewählt sind,

$Y_1$, $Z_1$, $Y_2$ und $Z_2$ verbunden sein können,
X und $Y_1$ und $Z_1$ verbunden sein können, wenn X ein Kohlenwasserstoffrest ist, und
$X_3$ und $Z_3$ verbunden sein können.

3. Verfahren nach Anspruch 2, dadurch gekennzeichnet, dass der Katalysator aus der Gruppe der Harnstoffe, Binreste, Carbamate, N-Alkoxyamide, Tetraalkylharnstoffe und der N-substituierten Pyrrolidone gewählt ist.

4. Verfahren nach Anspruch 3, dadurch gekennzeichnet, dass der Katalysator aus der Gruppe der Tetraalkylharnstoffe und der N-substituierten Pyrrolidone und vorzugsweise unter Tetramethylharnstoff, Tetraäthylharnstoff, Tetrabutylharnstoff, N-Methylpyrrolidon und N-Äthylpyrrolidon gewählt ist.

5. Verfahren nach irgendeinem der vorangehenden Ansprüche, dadurch gekennzeichnet, dass es in einer Kolonne durchgeführt wird, in der das Halogensilan flüssig oder gasförmig am Fuss der Kolonne in die Zone eines Temperaturbereichs zwischen -30 und 200°C, vorzugsweise zwischen 0°C und 100°C, eingeleitet wird, der wenigstens eine Oxo-Amin-Gruppe enthaltende und gegebenenfalls als Lösung in einem Verdünnungsmittel vorliegende Katalysator im Gegenstrom in der Kolonne zirkuliert und am Kopf derselben zugeführt wird, in der Kolonne ein Temperaturgefälle zwischen -50°C und 200°C, vorzugsweise zwischen -30°C und 100°C, aufrecht erhalten wird, die Kopftemperatur der Kolonne derart ist, dass andere Produkte als $SiH_4$ in der flüssigen Phase gelöst bleiben und diese Temperatur vorzugsweise -30 bis 50°C beträgt, man am Fuss der Kolonne Tetrahalogensilan, Alkyl- oder Arylhalogen-Silane, restliche Halogensilane, den wenigstens eine Oxo-Amin-Gruppe enthaltenden Katalysator und das eventuelle Verdünnungsmittel gewinnt.

**Claims**

1. Process for the manufacture of silane by the disproportionation and/or the redistribution of a halogenosilane by bringing at least one halogenosilane containing at least one Si-H bond into contact with a catalyst, characterised in that the catalyst contains at least one oxoamine group and in that the silane formed is separated off by bringing the reaction products into contact with the said catalyst containing at least one oxoamine group.

2. Process according to Claim 1, characterised in that the catalyst containing at least one oxoamine group has the general formula:

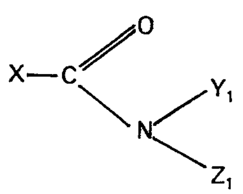

in which X is chosen from amongst hydrocarbon radicals having from 1 to 10 carbon atoms and the radicals:

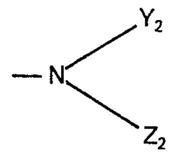

; —OR ;

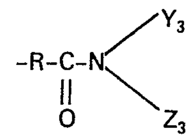

with $Y_2$, $Z_2$, R, $Y_3$ and $Z_3$ representing hydrocarbon radicals having from 1 to 10 carbon atoms, and $Y_1$ and $Z_1$ are chosen from amongst hydrocarbon radicals having from 1 to 10 carbon atoms and alkoxy radicals having from 1 to 10 carbon atoms, it being possible for $Y_1$, $Z_1$, $Y_2$ and $Z_2$ to be joined, it being possible for X and $Y_1$ or $Z_1$ to be joined when X is a hydrocarbon radical, and it being possible for $X_3$ and $Z_3$ to be joined.

3. Process according to Claim 2, characterised in that the catalyst is chosen from amongst the group comprising: ureas, diureas, carbamates, N-alkoxyamides, tetraalkylureas and N-substituted pyrrolidones.

4. Process according to Claim 3, characterised in that the catalyst is chosen from amongst the group comprising tetraalkylureas and N-substituted pyrrolidones and preferably tetramethylurea, tetraethylurea, tetrabutylurea, N-methylpyrrolidone and N-ethylpyrrolidone.

5. Process according to any one of the preceding claims, characterised in that it is carried out in a column into which the halogenosilane is introduced at the bottom, in liquid or gaseous form, in a zone having a temperature of between -30°C and 200°C and preferably of between 0°C and 100°C; the catalyst containing at least one oxoamine group, if appropriate dissolved in a diluent, circulates in counter-current in the column and is fed in at the top of the latter; a temperature gradient of between -50°C and 200°C and preferably of between -30°C and 100°C is maintained in the column; the temperature at the top of the column is such that the products other than $SiH_4$ remain dissolved in the liquid phase; this temperature is preferably between -30°C and 50°C; and tetrahalogenosilane or an alkyl halogenosilane or aryl halogenosilane, residual halogenosilanes, the catalyst containing at least one oxoamine group and, if appropriate, the diluent are collected at the foot of the column.